# EUROPEAN PATENT SPECIFICATION

(11) **EP 1 858 949 B1**
(45) Date of publication and mention of the grant of the patent: **03.12.2008**
(21) Application number: 06708131.5
(22) Date of filing: 09.02.2006
(51) Int. Cl.: C08G 18/42, C08K 3/36, C08K 5/00, C08K 5/52, C08J 9/00

(54) **FLAME RETARDED POLYESTER POLYURETHANE FOAM CONTAINING FUMED SILICA**
FLAMMGESCHÜTZTER POLYESTERPOLYURETHANSCHAUMSTOFF, ENTHALTEND PYROGENE KIESELSÄURE
MOUSSE POLYESTER POLYURETHANE IGNIFUGEE CONTENANT DE LA SILICE SUBLIMEE

(30) Priority: 10.02.2005 EP 05100959
(43) Date of publication of application: 28.11.2007
(73) Proprietor: Supresta LLC, NY 10522-3401 (US)
(72) Inventor: WUESTENENK, Johan, Antoni, NL-7021 KB Zelhem (NL)
(74) Representative: Beetz, Tom
(86) International application number: PCT/EP2006/050787
(87) International publication number: WO 2006/084871

(56) References cited:
- WO-A-01/18088
- WO-A-03/055940
- WO-A-20/05000954

## Description

The invention relates to polyester polyurethane foams obtained by reaction an organic polyisocyanate with a liquid polyol having a melting point lower than 25° C in the presence of a halogen-free organophosphorus flame retardant and a foam stabilizer, and to the use of foam stabilizers in said foams.

Polyester polyurethane foams containing flame retardants are well known in the art. Preferred flame retarding compositions comprise antimony-based compounds, halogenated, active hydrogen-containing component reactive with the polyisocyanate component, and halogenated flame-retarding agents. Numerous patent applications exist describing various of such compositions, for instance in WO 2004/094519 a flame-retardant formulation is described comprising as flame-retardant ingredients tris-(dichloropropyl) phosphate and tris-(butoxyethyl) phosphate. This reference also provides a method of making a polyurethane foam containing such flame retardant formulation from the reaction between a polymeric polyol and an aromatic isocyanate. In this method there is added to the foam-forming reaction mixture an amount of the flame retardant formulation. A general description of such foams can be found in Band VII, Polyurethane, Carl-Hanser-Verlag, München, 1st Edition 1966, ed. Dr. R. Vieweg and Dr. A. Höchtlein, 2nd Edition 1983 and 3rd Edition 1993, ed. Dr. G. Oertel.

Due to environmental and toxicological reasons there is however an increasing need for the use of halogen-free flame retardants, especially for automotive applications. In WO 2004/083291 a halogen-free two-component foam system is disclosed for producing a halogen-free fire protection foam with a polyol component which contains at least one polyether polyol, a catalyst for the reaction of the polyol with the isocyanate, water as foaming agent and graphite as the flame retardant compound.

Due to the presence of the graphite such foams are black-colored and sometimes possess insufficient flame retardant properties, i.e. they may be less effective than halogenated or halogen-free alkyl phosphates and cannot be used for uncolored foams. Organophosphorus flame retardants, on the other hand, are the flame retardants of choice. Thus there is a need for polyurethane foams containing organophosphorus flame retardants that are halogen-free. Unfortunately, such compositions provide low quality foams because during the foaming process foam collapse occurs, whereby the foam disintegrates, or boiling-like foams are obtained, i.e. foams with a very uneven distribution of cells comprising a wide range of size distribution of the cells. For instance, by using Fyrol® PNX (ex Akzo Nobel), a widely used halogen-free organophosphorus flame retardant, it is not possible to obtain an acceptable polyester polyurethane foam. In these cases the halogen-free organophosphorus flame retardant should be replaced by a halogen-containing organophosphorus flame retardant, such as Fyrol® A300TB or Fyrol® FR-2, which guarantee excellent foams. Alternatives are halogen-free flame retardants such as Fyrol® A710, which is an aryl phosphate rather than alkyl phosphate. Such film retardants, however, have the disadvantage that the foam comprises environmental and toxicological undesired phenol and TPP (triphenylphosphate), which foams moreover have less flame retardant efficiency.

It is an object of this invention to provide polyester polyurethane foams that comprise halogen-free flame retardants and which are able to give colorless foams.

To this end the invention relates to a polyester polyurethane foam obtained by reacting an organic polyisocyanate with a liquid polyol having a melting point lower than 25° C in the presence of a halogen-free organophosphorus flame retardant and a foam stabilizer, characterized in that the stabilizer is fumed silica in an amount of 0.1 to 5 wt.% of the composition.

In an aspect of this invention, the invention relates to a process for preparing a polyurethane foam by reacting a liquid organic polyisocyanate with a liquid polyol in the presence of water and a foam stabilizing additive, characterized in that the additive is fumed silica, which is present in an amount of 0.1 to 5 wt.% of the total composition.

Typically, polyols include those which have an average hydroxy equivalent weight of from about 20 to about 300, preferably from about 40 to about 100. Further, such polyol, preferably polyester polyols will generally contain from about 2 to about 8 hydroxy groups per molecule. Examples of suitable polyols include those commercially available under the trademarks DESMOPHEN® 2200B and FOMREZ® 60NF.

Polyisocyanates suitable for use in this invention include aliphatic and cycloaliphatic and especially aromatic polyisocyanates and combinations thereof. Representative of these types are diisocyanates such as meta- or para-phenylene diisocyanate, toluene-2,4-diisocyanate (TDI), toluene-2,6-diisocyanate, hexamethylene-1,6-diisocyanate, tetramethylene-1,4-diisocyanate, cyclohexane-1,4-diisocyanate, hexahydrotoluene diisocyanate (and isomers), naphthylene-1,5-diisocyanate, 1-methylphenyl-2,4-phenyldiisocyanate, diphenylmethane-4,4'-diisocyanate, diphenylmethane-2,4'-diisocyanate, 4,4'-diphenylene diisocyanate, 3,3'-dimethoxy-4,4'-diphenylenediisocyanate and 3,3'-dimethyldiphenylpropane-4,4'-diisocyanate, triisocyanates such as toluene-2,4,6-triisocyanate, and polyisocyanates such as 4,4'-dimethyl-diphenylmethane-2,2',5,5'-tetraisocyanate, and the various polymethylene polyphenyl polyisocyanates. A crude polyisocyanate may also be used in the practice of this invention, such as the crude toluene diisocyanate obtained by the phosgenation of a mixture of toluene diamines or the crude diphenylmethane diisocyanate obtained by the phosgenation of crude methylene diphenylamine. Especially preferred are toluene diisocyanate and methylene-bridged polyphenyl polyisocyanates and mixtures thereof.

When preparing polyurethane foam, water is the preferred blowing agent. Water reacts with the polyisocyanate leading to the generation of nascent carbon dioxide which functions as a blowing agent causing the reacting polyisocyanate-liquid polyol mass to acquire a reduced density. Water is present in an amount sufficient to provide for the majority, that is at least 50, preferably at least 70, more preferably at least 85 and up to 100 mole percent of the blowing requirement to obtain polyurethane foam which preferably has a density less than 35 kilograms per cubic meter. Preferably the resulting foam has a density less than 32, more preferably from about 10 to 25 kilograms per cubic meter. Typically the amount of water required for this purpose is from about 1 to about 10 parts per 100 parts by weight of liquid polyol. The water is present preferably in an amount of from about 1, more preferably from about 3.5, and preferably up to about 8, more preferably up to about 6 parts per 100 parts by weight of liquid polyol.

In accordance with the present invention, the fumed silica preferably comprises 5 weight percent of the composition or less, preferably from 0.1 to 3 weight percent, more preferably from 0.3 to 1 weight percent. At higher density foams, i.e. between 25 and 35 kg/m³, 0.3 wt.% fumed silica is already sufficient to provide good quality foams. At densities lower than 25 kg/m³, quantities up to 5 wt.%, preferably about 1 wt.% gave optimum foams. The fumed silica preferably has an average particle size of from about 7 to about 40 nanometers.

Fumed silica is typically produced by the vapor phase hydrolysis of silicon tetrachloride in a hydrogen oxygen flame. The combustion process creates silicon dioxide molecules, which condense to form particles, which in turn sinter together into aggregates. Fumed silica is available in treated and untreated grades. The untreated grades vary in surface area, bulk density, and thickening efficiency in nonpolar systems. For example, the Cabot Corporation, Degussa Corporation and Wacker Silicones Corporation produce fumed silica. Cabot products are sold under the trade name CAB-O-SIL® and Degussa products are sold under the AEROSIL® trade name.

Preferred fumed silicas include CAB-O-SIL L-90, MS-55, HS-5, LM-130, LM-150, HDK 30, and M-5; and Degussa AEROSIL R200, US200, R202, R972, US202, US204 and US206. The preferred fumed silicas comprise average particle sizes of from about 7 to about 40 nanometers.

The silica is added to the polyurethane-water-flame retardant mixture before foaming. The silica is preferably added with good mixing, which can be achieved with the use of a pump, stirrer or the like.

An essential component in the composition of the present invention is a halogen-free organophosphorus flame retardant The amount of the organophosphorus additive will range from 1 to 20 wt.% of the composition, and preferably 3 to 8 wt.% of the composition.

The organophosphorus flame retardant can be a monomeric phosphate ester of the type conventionally used which has the formula O=P-(OR)₃, where R is selected from alkyl groups having from 1 to 6 carbon atoms.

Representative examples of such flame retardants include tri-isopropyl phosphate and tri-ethyl phosphate.

Alternatively, the organophosphorus flame retardant component can be an oligomeric organophosphorus flame retardant, preferably having a phosphorus content of no less than about 5 wt.%, and in preferred embodiments when an organophosphate is desired, at least three phosphate ester units therein (i. e., at least two phosphate ester repeating units and a phosphate capping unit, the alkyl group being free from halogens). The term "oligomeric" as used herein means to exclude monomeric species.

Representative organophosphorus additives of this type are generally described in US Patent No. 4,382,042. These preferred halogen-free organophosphate oligomers can be formed by reacting phosphorus pentoxide with the selected trialkyl phosphate (e. g., triethyl phosphate) to form a polyphosphate ester containing P-O-P bonds that is then reacted with epoxide (e. g., ethylene oxide) to form the desired product. This preferred oligomeric organophosphate flame retardant is of the formula:

RO-[P(OR)(O)-O-R'-O-]ₙ-P(O)(OR)₂

where n (which designates the "repeating" phosphate ester units) can range, on a number average basis, from 1 to about 20, preferably from 2 to about 10, and R is selected from alkyl and hydroxyalkyl, and R' is alkylene. The alkyl and alkylene groups will generally contain from about two to about ten carbon atoms.

Especially preferred oligomeric phosphates for use herein will comprise ethyl and ethylene groups as the alkyl and alkylene moieties, will have a hydroxy functionality of no more than about 30 mg KOH/g, will have an acid number of no more than about 2.5 mg KOH/g, and will have a phosphorus content that ranges from about 15% to about 25%, by weight. A representative and commercially available example of an additive of this type is FYROL® PNX from Akzo Nobel Chemicals Inc. This is an oligomeric phosphate ester (CAS # 184538-58-7) of the above formula where n is, on a number average basis, of from about 2 to about 20, R is ethyl, and R' is ethylene. FYROL® PNX has a phosphorus content of about 19 wt.% and a viscosity at 25° C of about 2000 mPa.s.

Optionally, other ingredients may be present in the process of preparing the polyurethane foam include catalysts, surfactants, and nitrogen containing substances such as melamine, colorants, antioxidants, reinforcing agents, fillers, antistatic agents, and the like.

When using the polyurethanes of the invention it is unnecessary to use hydrocarbon oils as emulsifier. The present compositions therefore are preferably free from hydrocarbon oil.

It is may be useful to employ a minor amount of a surfactant to help to control the growth and retention of the cell structure of the foam at least up to the point until it is sufficiently cured so that it no longer susceptible to collapse. Such surfactants advantageously comprise an organosilicone surfactant. Other, less preferred surfactants, include polyethylene glycol ethers of long chain alcohols, tertiary amine or alkanolamine salts of long chain alkyl acid sulfate esters, alkyl sulfonate esters and alkyl aryl sulfonic acids. Such surfactants are employed in amounts sufficient to stabilize the foaming reaction mixture against collapse and the formation of large, uneven cells. Typically, from about 0.2 to about 5 parts of the surfactant per 100 parts by weight liquid polyol are sufficient for this purpose.

In the process of making a polyurethane foam, the polyol(s), polyisocyanate, flame retardant, and fumed silica, and if present other components are contacted, thoroughly mixed and permitted to expand and cure into a cellular polymer. The particulate mixing apparatus is not critical, and various types of mixing head and spray apparatus are conveniently used. It may be convenient, but not necessary, to pre-blend certain of the raw materials prior to reacting the polyisocyanate and polyol components. Alternatively, all components can be introduced individually to the mixing zone where the polyisocyanate and polyol(s) are contacted. It is also possible to pre-react all or a portion of the polyol(s) with the polyisocyanate to form a prepolymer.

A non-limitative example of a suitable foam composition is (in parts per weight):

| | |
|---|---|
| Desmophen® 2200B (ex Bayer) | 100 |
| Fyrol® PNX (ex Supresta) | 4.0 - 6.0 |
| Fumed Silica: | |
| Aerolsil® R972 (ex Degussa) or HDK® H30 (ex Wacker) | 0.3 - 1.0 |
| Water | 4.0 - 6.0 |
| Tegoamin® CPE (ex Goldschmidt) | 1.3 |
| Fomrez® M6682 (ex Crompton) | 1.0 |
| TDI (T80/T65 50/50) (ex Bayer) | 49.0 |

## Claims

1. A polyester polyurethane foam obtained by reacting an organic polyisocyanate with a liquid polyol having a melting point lower than 25° C in the presence of a halogen-free organophosphorus flame retardant and a foam stabilizer, **characterized in that** the stabilizer is fumed silica in an amount of 0.1 to 5 wt.% of the composition.

2. The polyester polyurethane foam of claim 1 wherein the flame retardant is Fyrol® PNX.

3. The polyester polyurethane foam of claim 1 or 2 wherein the amount of flame retardant is 1 to 10 wt.% of the composition, and preferably 4 to 6 wt.% of the composition.

4. The polyester polyurethane foam of any one of claims 1 to 3 wherein the amount of fumed silica is 0.3 to 1 wt.% of the composition.

5. The polyester polyurethane foam of any one of claims 1 to 4 wherein the foam has a density less than 35 kg/m³.

6. Use of fumed silica as a foam stabilizer for a polyester polyurethane foam obtained by reaction an organic polyisocyanate with a liquid polyol having a melting point lower than 25° C comprising a halogen-free organophosphorus flame retardant.

## Patentansprüche

1. Polyester-Polyurethan-Schaum, der durch Umsetzen eines organischen Polyisocyanats mit einem flüssigem Polyol mit einem Schmelzpunkt unter 25°C in der Anwesenheit eines halogenfreien Organophosphor-Flammenhemmstoffs und eines Schaumstabilisators erhalten wird, **dadurch gekennzeichnet, dass** der Stabilisator Quarzstaub in einer Menge von 0,1 Gew.-% bis 5 Gew.-% der Zusammensetzung ist.

2. Polyester-Polyurethan-Schaum gemäß Anspruch 1, wobei der Flammenhemmstoff Fyrol® PNX ist.

3. Polyester-Polyurethan-Schaum gemäß Anspruch 1 oder 2, wobei die Menge an Flammenhemmstoff 1 Gew.-% bis 10 Gew.-% der Zusammensetzung und vorzugsweise 4 Gew.-% bis 6 Gew.-% der Zusammensetzung beträgt.

4. Polyester-Polyurethan-Schaum gemäß einem der Ansprüche 1 bis 3, wobei die Menge an Quarzstaub 0,3 Gew.-% bis 1 Gew.-% der Zusammensetzung beträgt.

5. Polyester-Polyurethan-Schaum gemäß einem der Ansprüche 1 bis 4, wobei der Schaum eine Dichte von weniger als 35 kg/m³ aufweist.

6. Verwendung von Quarzstaub als Schaumstabilisator für einen Polyester-Polyurethan-Schaum, der durch die Umsetzung eines organischen Polyisocyanats mit flüssigem Polyol mit einem Schmelzpunkt von unter 25°C erhalten wird, der einen halogenfreien Organophosphor-Flammenhemmstoff aufweist.

## Revendications

1. Mousse de polyester polyuréthane obtenue par réaction d'un polyisocyanate organique avec un polyol liquide ayant un point de fusion inférieur à 25 °C en présence d'un agent ignifuge constitué d'un organophosphore exempt d'halogène et d'un stabilisant, **caractérisée en ce que** le stabilisant est la silice fumée en une quantité de 0,1 à 5 % en poids de la composition.

2. Mousse de polyester polyuréthane selon la revendication 1, dans laquelle l'agent ignifuge est Fyrol^{®} PNX.

3. Mousse de polyester polyuréthane selon la revendication 1 ou 2, dans laquelle la quantité de l'agent ignifuge est de 1 à 10 % en poids de la composition, et de préférence de 4 à 6 % en poids de la composition.

4. Mousse de polyester polyuréthane selon l'une quelconque des revendications 1 à 3, dans laquelle la quantité de silice fumée est de 0,3 à 1 % en poids de la composition.

5. Mousse de polyester polyuréthane selon l'une quelconque des revendications 1 à 4, dans laquelle la mousse possède une masse volumique inférieure à 35 kg/m³.

6. Utilisation de silice fumée à titre de stabilisant de mousse pour une mousse de polyester polyuréthane obtenue par réaction d'un polyisocyanate organique avec un polyol liquide ayant un point de fusion inférieur à 25 °C comprenant un agent ignifuge constitué d'un organophosphore exempt d'halogène.
